# EUROPEAN PATENT SPECIFICATION

(11) **EP 3 166 410 B1**
(45) Date of publication and mention of the grant of the patent: **07.08.2019**
(21) Application number: 15818343.4
(22) Date of filing: 10.06.2015
(51) Int. Cl.: A21C 3/02, A21C 11/22

(54) **METHOD FOR PRODUCING ELONGATE FOODSTUFFS**
VERFAHREN ZUR HERSTELLUNG VON LÄNGLICHEN LEBENSMITTELN
PROCÉDÉ PERMETTANT LA PRÉPARATION DE PRODUITS ALIMENTAIRES ALLONGÉS

(30) Priority: 07.07.2014 FI 20145654
(43) Date of publication of application: 17.05.2017
(73) Proprietor: Polar Device OY, 90100 Oulu (FI)
(72) Inventor: LI, Haili, FI-90100 Oulu (FI); LI, Lina, FI-04230 Kerava (FI); LI, Yafu, FI-04230 Kerava (FI); DENG, Chengqian, FI-04230 Kerava (FI)
(74) Representative: Boco IP Oy Ab
(86) International application number: PCT/FI2015/050408
(87) International publication number: WO 2016/005653

(56) References cited:
- CN-A- 1 097 270
- CN-A- 1 097 270
- CN-A- 103 262 872
- CN-U- 203 251 863
- CN-Y- 2 540 770
- CN-Y- 2 627 834
- CN-Y- 2 627 834
- FR-A3- 2 007 743
- GB-A- 1 538 675
- JP-A- H0 347 027
- JP-A- S6 049 736
- ANONYMOUS.: 'Pasta machine.', [Online] 01 January 2013, pages 1 - 1, XP055381432 Retrieved from the Internet: <URL:HTTP://WEB.ARCHIVE.ORG/WEB/20131213195 804/HTTP:/WWW.COOKIPEDIA.CO.UK/RECIPES_WIKI /PASTA_MACHINE> [retrieved on 2015-09-23]
- PASTADELICA.: 'PASTA MACHINE', [Online] 01 January 2013, pages 1 - 4, XP055381441 Retrieved from the Internet: <URL:http://web.archive.org/web/20131213195 804/ http://www.cookipedia.co.uk/recipes_wiki/Pa sta_machine> [retrieved on 2015-09-23]

## Description

The present invention relates to producing elongate foodstuff, such as noodles and different types of elongate pastas, for example. More precisely the invention relates to a method and an apparatus for producing such foodstuff by compressing dough of the foodstuff to be produced between rollers.

The prior art noodle and pasta machines sold to households operate according to two different main principles. The first operating principle is extrusion, which tends to produce dense structured end products, which corresponds more to spaghetti than proper noodles. The machines operating according to this first operating principle are often automatic, but generally noisy and hard to clean after use.

The second operating principle is elongation by compression, which produces end products more properly corresponding to proper noodles. This type of machines sold to household are manually operated or in some cases uses motors for operating the compression means such as compression rollers.

The prior art machines for commercial production of noodles comprises one or more pairs of rollers for compressing the dough material and the sheet formed from the dough material. The structure of these commercial machines is complex, the cost is high and they are large sized.

In CN 2627834 Y is disclosed an apparatus and a method for producing noodles. The apparatus comprises at least one fixed roll and adjustable roll and two belt conveyers for conveying the compressed dough back between the rollers and dough is fed via inlet port, which is formed by rolls between rolls and for compression and the dough passed between the pair of rollers is lead back to the said rollers with two belt conveyers.

In CN 1097270 A is disclosed an apparatus for producing dough belt, i.e. elongated foodstuff. The apparatus comprises a mixing vessel and mixing means for producing mixed dough for the compression and a pair of rollers for compressing the mixed dough between the rollers and two belt conveyers for conveying the compressed and thus elongated dough back between the pair or rollers.

In CN 203251863 U is disclosed an apparatus for producing elongated foodstuff. The apparatus comprises a pair of rollers for compressing dough between the rollers, and two belt conveyers for conveying the compressed and thus elongated dough back between the pair of rollers. The rollers of the pair of rollers are fixed so that the distance between the rollers is adjustable.

In CN 1097270 A is disclosed a method for producing elongate foodstuff in which dough is mixed, and the mixed dough is compressed between a single pair of rollers, in which the mixed dough is fed between said single pair of rollers for compression, and the dough passed between the pair of rollers is lead back between the said pair of rollers with at least two belt conveyors.

The present invention provides a novel method for producing these types of elongate foodstuffs, both for home and for commercial use.

In the method of the invention for producing elongate foodstuff, such as noodles and pasta, a dough is mixed, and the mixed dough is compressed between pair of rollers, wherein the mixed dough is fed between single pair of rollers for compression, and the dough passed between the pair of rollers is lead back between the said pair of rollers with at least two belt conveyers.

In the present invention the feature "mixed dough" means dry and coarse prefabricated material, from which the elongate foodstuff is produced by compression. Examples of this kind of prefabricated materials comprise different types of noodle and pasta dough. The mixed dough is preferably also such that it can be compressed between rollers and conveyed with belt conveyers without the dough sticking to these members.

In the method of the invention the compression of dough between the said pair of rollers takes place in two stages, wherein in the first stage the dough is compressed and elongated by the pair of rollers to form a continuous belt of dough passing through the pair of rollers, and in second stage the first conveyer belt after the pair of rollers is moved at least partially away from the pair of rollers leaving part of the length of the continuous belt of dough hanging while the belt of dough continues to be compressed between the pair of rollers, and simultaneously a gradual decreasing of the distance between the rollers of the pair of rollers is started.

In an embodiment of the method of the invention after the second compression stage the continuous belt of dough is cut transversely in relation to the length direction of the continuous belt of dough against one of the rollers of the pair of rollers with a cutter. The cutter may also be used to lead the cut end of the belt of dough.

In an embodiment of the method of the invention after the cutting of the continuous belt of dough the belt of dough is cut lengthwise to strips.

The present invention does not include an apparatus for producing elongate foodstuff, such as noodles and pasta, which apparatus comprises a pair of rollers for compressing mixed dough between the rollers, and at least two belt conveyers for conveying the compressed and elongated dough back between the pair of rollers.

In the apparatus that is not part of the invention the first belt conveyer after the pair of rollers is at fixed at least part movably to the apparatus for moving the belt conveyer away from the pair of rollers. This provides for a longer track for the compressed and elongated belt of dough.

In the apparatus that is not part of the invention the rollers of the pair of rollers are fixed adjustably to the apparatus for adjusting the distance between the rollers during the operation of the apparatus. This provides for further compression and elongation of the belt of dough.

In the apparatus that is not part of the invention the apparatus comprises a mixing vessel and mixing means for producing the mixed dough for the compression. This embodiment provides for an automatic apparatus, which requires only that the required materials are added to the mixing vessel in order to produce the elongated foodstuff, such as noodles and pasta.

In the apparatus that is not part of the invention the apparatus comprises a cutter for cutting the compressed and elongated dough transversely in relation to the length direction of the elongated dough against one of the rollers. The cutter may also be used to lead the cut end of the elongated dough.

In the apparatus that is not part of the invention the apparatus comprises cutting means for cutting the compressed and elongated dough lengthwise to strips.

The features defining a method according to the present invention are disclosed more precisely in claim 1.

Dependent claims disclose advantageous embodiments and features of the invention.

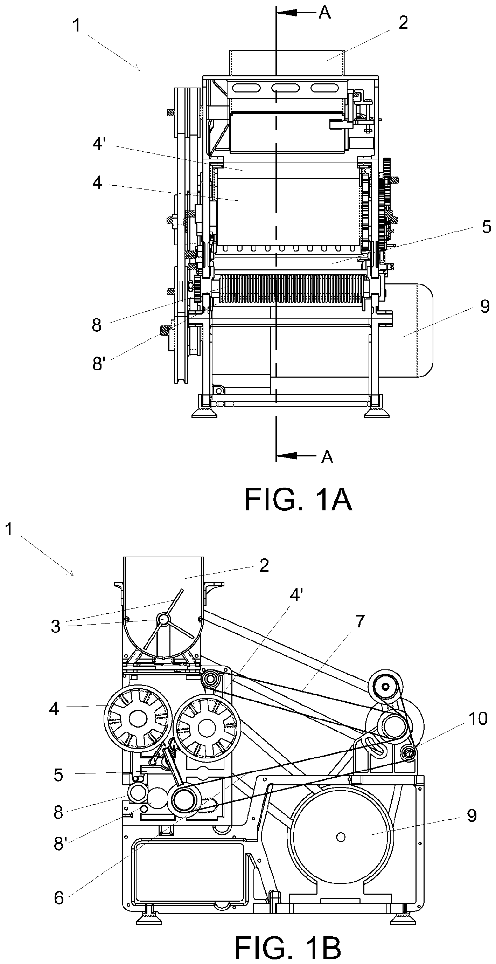

Exemplifying embodiment of the invention and its advantages are explained in greater detail below in the sense of example and with reference to accompanying drawings, where
Figures 1A-1C shows schematically an embodiment of the method according to the invention and an apparatus which is not part of the present invention.

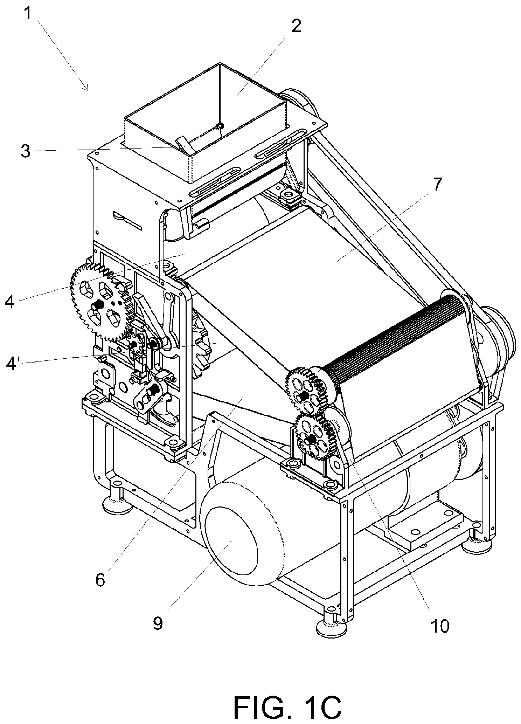

In the Figures 1A-1C showing an embodiment of the method according to the invention and an apparatus 1 which is not part of the present invention, Figure 1A shows the apparatus as an end view, Figure 1B shows cross-section of the apparatus along line A-A shown in Figure 1A, and Figure 1C shows the apparatus as a perspective view. In the figures the apparatus 1 is shown without supporting encasing in order to show the inner parts of the apparatus.

The apparatus 1 comprises a mixing vessel 2 with mixing means 3 consisting of a shaft with protrusions inside the vessel for mixing dough such as noodle or pasta dough. In the mixing vessel 2 flour and other dry substances of the dough to be mixed are mixed with liquid or semi-liquid materials, such as water and raw eggs for example, with the mixing means 3. The mixing vessel 2 and the mixing means 3 are removably attached to the apparatus 1, so that they can be easily detached from the apparatus and washed.

Once the mixed dough is ready, the bottom of the mixing vessel 2 formed of two hinged hatches is opened, in order to allow the ready mixed dough to drop on pair of rotating rollers 4, 4'. The mixed dough passes between the rotating pair of rollers 4, 4', which compresses and elongates the mixed dough by their rotating movement and thus forces the mixed dough between the rollers. After the pair of rollers 4, 4' is a plate member 5, which leads the end of the compressed and elongated dough passed between the pair of rollers on a first belt conveyer 6. The first belt conveyer 6 moves the end of the compressed and elongated dough on to a second belt conveyer 7. The distant end of the first belt conveyer 6 turns around the end of the second belt conveyer 7, and the belts of belt conveyers 6 and 7 are in contact with each other or the surfaces of the belts are very close to each other in this area. This allows the end of the compressed and mixed dough to be turned on the second belt conveyer 7. The second belt conveyer 7 then moves the end of the compressed mixed dough back between the pair of rollers 4, 4' for further compression. This process continues until a continuous ring of compressed mixed dough is formed that rotates from between the pair of rollers 4, 4' through first belt conveyer 6 and second belt conveyer 7 back to between the pair of rollers. In cases of coarse and lumpy mixed dough, such as noodles dough, it may take several rounds of rotating and compressing the mixed dough parts between the pair of rollers 4, 4' for the continuous and uniform belt ring of dough to be formed.

In the embodiment of the figures the first belt conveyer 6 is equipped with a suitable tightening roller 10. The tightening roller 10 is connected to the frame of the apparatus through elastic members, such as spring members for example, so that the surfaces of the first belt conveyer 6 and the second belt conveyer 7 may move towards each other and away from each other when the compressed mixed dough or parts of it passes between these surfaces and are moved from the first belt conveyer on to the second belt conveyer, depending on the thickness of the compressed mixed dough.

Once the continuous belt of dough is formed and the dough has been compressed between the pair of rollers 4, 4' for suitable length of time, the first end of the first belt conveyer 6 is moved a distance away from the pair of rollers. This movement leaves the belt of dough at first hanging on at least a portion of the distance between roller 4' and the first end of the second belt conveyer 7, and thus provides a longer track for the continuous belt of dough to rotate. Simultaneously a gradual decrease of the distance between the rollers 4, 4' is started, which gradually thins and lengthens the continuous belt of dough, which will gradually starts to make use of the longer track.

After this change of position of the first belt conveyer 6 and the start of the gradual decrease of the rollers 4, 4', the compression and rotation of the belt of dough is continued for suitable length of time.

Once the formed belt of dough is ready compressed and elongated, the plate member 5 is turned in position, where its sharpened upper end presses against roller 4' and cuts the belt of dough along its width, and the lower end of the plate member is placed so that the plate member lead the cut belt of dough between a pair of rollers 8, 8'. Thus the sharpened upper end of the plate member 5 operates as a cutter. The rollers 8, 8' are preferably removable, so that the apparatus 1 may be used also to produce sheets of compressed dough, such as pasta sheets.

The outer surface of roller 8 is formed with protrusions, which cut the belt of dough in strips along the length of the belt of dough, when the belt of dough passes between the rollers 8, 8'.

After the compression stages the thickness of the produced elongated foodstuff is about 1.5 mm, for example. The gradual decrease of the distance between the rollers 4, 4' may take the distance finally to 1/6 or the starting distance, which starting distance between the rollers may thus be 9 mm.

The adjustability of distance between rollers 4 and 4' is implemented in this embodiment by rotating the rollers on shafts which are eccentrically connected to the frame of the apparatus 1, so that by turning the eccentrically connected shafts the rotational center axis of both of the rollers may be moved towards or away from each other.

The operation time of the machine from the introduction of the mixed dough to the rollers 4, 4' to the exit of the ready compressed and cut elongate foodstuff may be about 10 minutes for example, from which the first compression stage is about 3 minutes for example.

The operating power for the apparatus in this embodiment is provided with an electric motor 9, and the power is transferred to operating elements of the apparatus via belts.

The cleaning of the embodiment of the figures is easily carried out by opening hatch or hatches on the outer surface the apparatus, which hatch/hatches allow access to the rotating rollers and moving belts. Thus the cleaning can be implemented by setting suitable cleaning instrument, such as a brush or cloth for example, against the rotating members and moving belts when the apparatus is running.

The use of the embodiment shown in the figures is preferably automated, so that only the materials according to the recipe of the dough of the product to be produced needs to be added in the mixing vessel, after which the apparatus is turned on. Selection for the amount to be produced, the thickness of the product to be produced and whether the product to be produced is in form of strips or sheets may also be included. This will lead to ready-made noodles or pasta in desired amount after required operating time of the apparatus which may depend on the selections made.

## Claims

1. A method for producing elongate foodstuff, such as noodles and pasta, in which dough is mixed, and the mixed dough is compressed between a single pair of rollers (4, 4'), in which the mixed dough is fed between said single pair of rollers (4, 4') for compression, and the dough passed between the pair of rollers is lead back between the said pair of rollers with at least two belt conveyers (6, 7), **characterized in that** the compression of dough between said pair of rollers (4, 4') takes place in two stages, wherein in the first stage the dough is compressed and elongated by the pair of rollers to form a continuous belt of dough passing through the pair of rollers, and in the second stage the first conveyer belt (6) after the pair of rollers is moved at least partially away from the pair of rollers leaving part of the length of the continuous belt of dough hanging while the belt of dough continues to be compressed between the pair of rollers, and simultaneously a gradual decreasing of the distance between the rollers of the pair of rollers is started.

2. A method according to claim 1, wherein after the second compression stage the continuous belt of dough is cut transversely in relation to the length direction of the continuous belt of dough against one of the rollers (4') of the pair of rollers (4, 4') with a cutter (5).

3. A method according to claim 2, wherein after the cutting of the continuous belt of dough the belt of dough is cut lengthwise to strips.

## Patentansprüche

1. Verfahren zur Herstellung von länglichen Nahrungsmitteln wie Nudeln und Pasta, wobei Teig gemischt wird und der gemischte Teig zwischen einem einzelnen Paar von Walzen (4, 4') verdichtet wird, wobei der gemischte Teig zur Verdichtung zwischen das einzelne Walzenpaar (4, 4') eingeführt wird und der durch das Walzenpaar gelaufene Teig mit mindestens zwei Bandförderern (6, 7) zwischen dieses Walzenpaar zurück geführt wird, **dadurch gekennzeichnet, dass** die Verdichtung des Teigs zwischen dem Walzenpaar (4, 4') in zwei Stufen erfolgt, wobei in der ersten Stufe der Teig durch das Walzenpaar verdichtet und gestreckt wird, um ein durch das Walzenpaar laufendes kontinuierliches Band von Teig zu bilden, und in der zweiten Stufe das erste Förderband (6) nach dem Walzenpaar mindestens teilweise vom Walzenpaar weg bewegt wird, so dass ein Teil der Länge des kontinuierlichen Teigbandes hängen gelassen wird, während das Teigband zwischen dem Walzenpaar weiter verdichtet wird, und gleichzeitig mit einer allmählichen Verminderung des Abstandes zwischen den Walzen des Walzenpaares begonnen wird.

2. Verfahren nach Anspruch 1, wobei nach der zweiten Verdichtungsstufe das kontinuierliche Teigband quer zur Längsrichtung des kontinuierlichen Teigbandes gegen eine der Walzen (4') des Walzenpaares (4, 4') mit einem Schneidgerät (5) geschnitten wird.

3. Verfahren nach Anspruch 2, wobei nach dem Schneiden des kontinuierlichen Teigbandes das Teigband längs in Streifen geschnitten wird.

## Revendications

1. Procédé de fabrication d'aliments allongés tels que nouilles et pâtes alimentaires, dans lequel une pâte est malaxée et la pâte malaxée est comprimée entre une seule paire de rouleaux (4, 4'), ladite pâte malaxée étant amenée entre ladite seule paire de rouleaux (4, 4') pour compression et la pâte venant de passer entre la paire de rouleaux étant ramenée entre ladite paire de rouleaux avec au moins deux bandes transporteuses (6, 7), **caractérisé en ce que** la compression de la pâte entre ladite paire de rouleaux (4, 4') a lieu en deux étapes, ladite pâte, dans la première étape, étant comprimée et allongée par la paire de rouleaux pour former une bande de pâte continue passant par la paire de rouleaux et, dans la deuxième étape, la première bande transporteuse (6) après la paire de rouleaux étant au moins partiellement éloignée de la paire de rouleaux en laissant pendre une partie de la longueur de la bande de pâte continue pendant que la bande de pâte continue d'être comprimée entre la paire de rouleaux, et simultanément, une réduction graduelle de l'écart entre les rouleaux de la paire de rouleaux commence.

2. Procédé selon la revendication 1, dans lequel, après la deuxième étape de compression, la bande de pâte continue est coupée transversalement par rapport au sens longitudinal de la bande de pâte continue contre l'un des rouleaux (4') de la paire de rouleaux (4, 4') avec un dispositif coupeur (5).

3. Procédé selon la revendication 2, dans lequel, après la découpe de la bande de pâte continue, la bande de pâte continue est refendue en rubans dans le sens de la longueur.
